# EUROPEAN PATENT SPECIFICATION

(11) **EP 3 686 435 B1**
(45) Date of publication and mention of the grant of the patent: **11.03.2026**
(21) Application number: 20153622.4
(22) Date of filing: 24.01.2020
(51) Int. Cl.: F04D 13/06, F04D 15/00, F04D 29/42, F04D 29/48, F16K 7/17

(54) **BIDIRECTIONAL PUMP**
BIDIREKTIONALE PUMPE
POMPE BIDIRECTIONNELLE

(30) Priority: 25.01.2019 KR 20190009714
(43) Date of publication of application: 29.07.2020
(73) Proprietor: LG Electronics Inc., SEOUL 07336 (KR)
(72) Inventor: JUNG, Dohyun, 08592 Seoul (KR); LEE, Taehee, 08592 Seoul (KR)
(74) Representative: Frenkel, Matthias Alexander

(56) References cited:
- EP-A1- 0 924 435
- EP-A2- 0 145 672
- US-A1- 2014 286 747
- US-A1- 2014 286 747

## Description

### BACKGROUND OF THE INVENTION

### Field of the invention

The present disclosure relates to bidirectional pump and, more particularly, to a bidirectional pump that can adjust the discharge direction of fluid according to the rotating direction of a single motor.

### Related Art

Generally, a bidirectional pump is a device that is used in a washing machine or a dishwasher and is used to change a water supply direction according to the circulation mode and the drainage mode of the washing machine or the dishwasher.

A conventional bidirectional pump has a motor and an impeller on each of two water supply paths to adjust a water supply direction. This bidirectional pump is problematic in that its structure is complex, its installation cost is expensive, and replacement and repair are difficult.

In order to solve the problems, a bidirectional pump that may supply water in either direction through an electronic valve while having only one motor and impeller has been developed. However, this bidirectional pump is problematic in that the installation cost of the electronic valve is also expensive, and it is impossible to completely exclude malfunction due to electronic defects.

Furthermore, this bidirectional pump is problematic in that closing any one of paths (or holes) through which water is supplied via a linear member so as to change a water supply direction makes it difficult to ensure reliability.

Moreover, there has not been proposed a structure that can minimize the flow resistance of water even when a water supply direction is changed.

Meanwhile, as a housing defining an exterior of the bidirectional pump is not integrally formed but is manufactured as an assembly, water may unexpectedly flow out due to high pressure generated in the bidirectional pump.

EP 0 145 672 A2 discloses a bidirectional pump having two delivery ducts supplied alternatively with pumped liquid. And, a flexible diaphragm of the pump separates two compartments, and is configured to close one of the two compartments.

US 2014/286747 A1 discloses a liquid pump comprising an impeller housed in an impeller chamber having an axial inlet and a plurality of centrifugal passages communicating with a plurality of outlets through a valve. The rotation of the impeller pumps the liquid into one of the centrifugal passages and elastically deforms the valve that controls through which outlet the liquid is pumped out of the pump.

EP 0 924 435 A1 discloses a dual outlet washer pump comprising a valve element having a frame portion and a flexible membrane

### SUMMARY OF THE INVENTION

The invention is set out in the independent claim. Preferred embodiments of the invention are set out in the dependent claim.

The present disclosure provides a bidirectional pump that can adjust a water supply direction while having a single motor and impeller.

The present disclosure also provides a bidirectional pump that can minimize flow resistance while guiding the change of a water supply direction.

The present disclosure also provides a bidirectional pump including a housing that can prevent water from leaking out.

Objects of the present disclosure are not limited to the above-mentioned objects. Other objects that are not mentioned herein may be more clearly understood by those skilled in the art from the following description.

According to a first aspect, we describe a bidirectional pump, comprising: a housing comprising a fluid inlet, and first and second fluid outlets that communicate with the fluid inlet and face each other; an impeller disposed in the housing, and rotating in a forward direction or in a reverse direction; a motor configured to impart a rotating force to the impeller; a diaphragm disposed between the first and second fluid outlets in the housing, and deformed according to pressure exerted by rotation of the impeller, wherein the diaphragm closes either of the first and second fluid outlets according to a rotating direction of the impeller; a partition wall disposed in the housing, and guiding flow of fluid from the fluid inlet to either of the first and second fluid outlets, and wherein the diaphragm comprises: a fixing part fixed to the housing; an insert part configured such that a portion thereof is insertable into either of the first and second fluid outlets; and a deforming part connecting the fixing part and the insert part to each other, and deformable towards either of the first and second fluid outlets, characterized in that wherein a width of the partition wall in a plan view is reduced downstream of the fluid flow from the fluid inlet to either of the first and second fluid outlets, wherein in the plan view the partition wall is disposed between the impeller and the diaphragm and the fixed part facing the impeller is coupled to the end of the partition wall with reduced width, wherein the partition wall is formed as a portion of a chamber, the chamber is disposed in the housing and accommodates the impeller and a plate therein, and wherein a portion of the partition wall is fixedly inserted into the plate and the partition wall is disposed in the middle of a passage through which the fluid flows.

The diaphragm includes a fixing part fixed to the housing; an insert part configured such that a portion thereof is insertable into either of the first and second fluid outlets; and a deforming part connecting the fixing part and the insert part to each other, and deformable towards either of the first and second fluid outlets.

The deforming part may be an elastic body, may be wrinkled before the deformation, and may be unwrinkled after the deformation.

The insert part may be formed in a spherical shape, and may have a diameter smaller than a diameter of each of the first and second fluid outlets.

The housing may include a groove part into which the fixing part is inserted, and the fixing part may be detachably fixed to the groove part.

The bidirectional pump further includes a partition wall disposed in the housing, and guiding flow of fluid from the fluid inlet to either of the first and second fluid outlets.

The housing may be integrally formed to prevent the fluid from flowing in and out at positions other than the fluid inlet and the first and second fluid outlets.

Other objects that are not mentioned herein may be fully deduced from the following description of embodiments.

### BRIEF DESCRIPTION OF THE DRAWINGS

FIG. 1 is a perspective view illustrating a bidirectional pump according to an embodiment of the present disclosure.
FIG. 2 is a diagram illustrating an installed state of a diaphragm according to an embodiment of the present disclosure.
FIG. 3 is a diagram illustrating the diaphragm when an impeller according to an embodiment of the present disclosure is not rotated.
FIG. 4 is a diagram illustrating a state in which the diaphragm is deformed to close a first fluid outlet when the impeller according to the embodiment of the present disclosure rotates in a forward direction.
FIG. 5 is a diagram illustrating a state in which the diaphragm is deformed to close a second fluid outlet when the impeller according to the embodiment of the present disclosure rotates in a reverse direction.

### DESCRIPTION OF EXEMPLARY EMBODIMENTS

The above and other objects, features and other advantages of the present disclosure will be more clearly understood from the following detailed description when taken in conjunction with the accompanying drawings. However, the disclosure should not be limited to embodiments set forth herein but may be implemented in a variety of forms. The embodiments described herein are provided to make the disclosure complete. The disclosure is defined merely by the scope of claims. The same reference numerals are used throughout the drawings to designate the same components.

It will be understood that when a component is referred to as being "coupled to" or "connected to" another component, it may be directly coupled or connected to the other element or intervening components may be present therebetween.

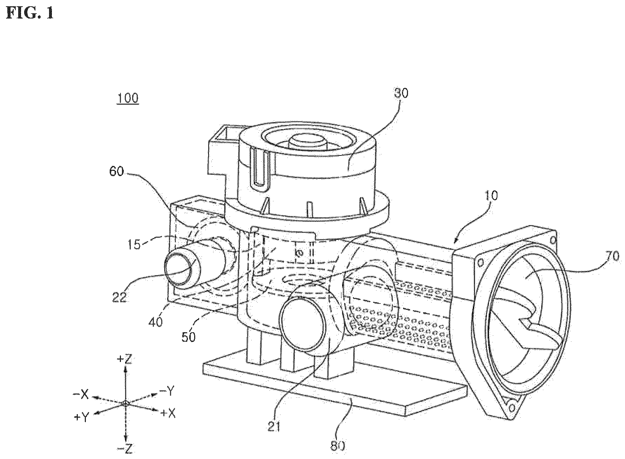

The present disclosure may be described with reference to a spatial orthogonal coordinate system by X, Y, and Z axes that are shown in FIG. 1 and the like and are orthogonal to each other. Each axis direction (X-axis direction, Y-axis direction, and Z-axis direction) means both directions in which each axis extends. A symbol '+' added to a front of each axis direction (+ X-axis direction, + Y-axis direction, + Z-axis direction) means any one of both directions in which each axis extends, namely, a positive direction. A symbol '-' added to a front of each axis direction (- X-axis direction, - Y-axis direction, - Z-axis direction) means a remaining one of both directions in which each axis extends, namely, a negative direction.

Hereinafter, a bidirectional pump according to an embodiment of the present disclosure will be described with reference to FIGS. 1 to 5.

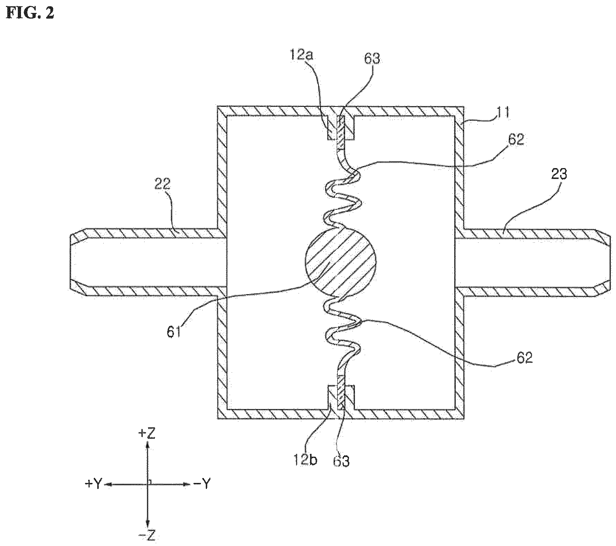

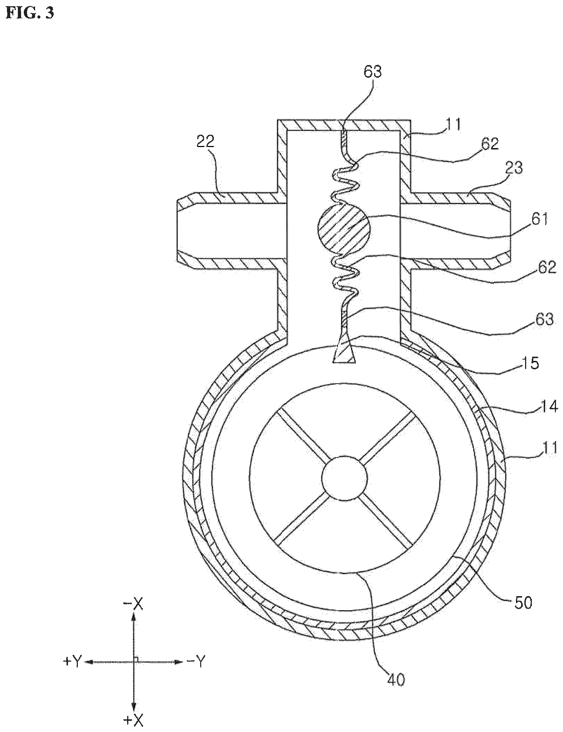

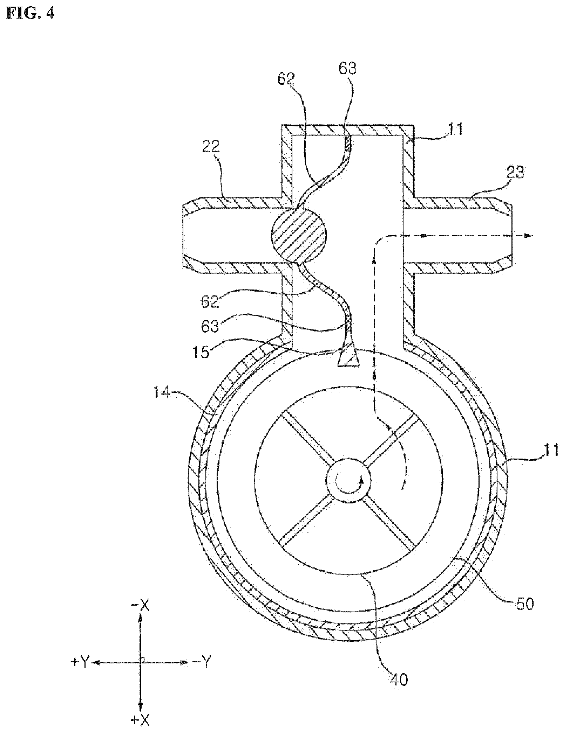

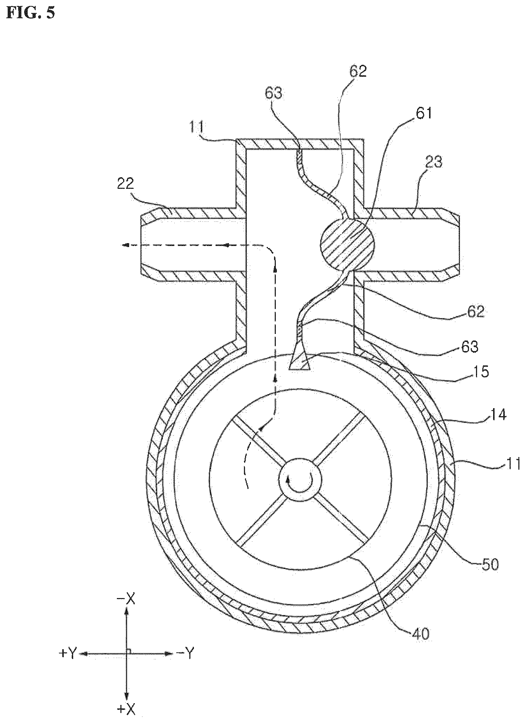

FIG. 1 is a perspective view illustrating a bidirectional pump according to an embodiment of the present disclosure. FIG. 2 is a diagram illustrating an installed state of a diaphragm according to an embodiment of the present disclosure, FIG. 3 is a diagram illustrating the diaphragm when an impeller according to an embodiment of the present disclosure is not rotated, FIG. 4 is a diagram illustrating a state in which the diaphragm is deformed to close a first fluid outlet when the impeller according to the embodiment of the present disclosure rotates in a forward direction, and FIG. 5 is a diagram illustrating a state in which the diaphragm is deformed to close a second fluid outlet when the impeller according to the embodiment of the present disclosure rotates in a reverse direction.

The bidirectional pump 100 according to the embodiment of the present disclosure may be a device that is used in a washing machine or a dishwasher.

By way of example, it is necessary to supply water into a tub or drain water to an outside during a washing operation. To this end, a device for changing a water supply (discharge) direction is required. Hence, the bidirectional pump 100 according to the embodiment of the present disclosure may be used.

As shown in FIG. 1, the bidirectional pump 100 according to the embodiment of the present disclosure includes a housing 10, an impeller 40, a motor 30, and a diaphragm 60.

The housing 10 may define an exterior of the bidirectional pump 100, and may be made in various shapes as well as a shape shown in FIG. 1.

A fluid inlet 21, a first fluid outlet 22, and a second fluid outlet 23 are formed in the housing 10.

The fluid such as water may be introduced into the housing 10 through the fluid inlet 21. In this case, the relevant fluid may pass through a filter (not shown). The fluid introduced into the housing 10 through the fluid inlet 21 may be discharged through either of the first and second fluid outlets 22 and 23 to the outside of the housing 10.

That is, the first and second fluid outlets 22 and 23 communicate with the fluid inlet 21. Furthermore, according to the present invention, the first and second fluid outlets 22 and 23 are arranged to face each other. Center lines of the first and second fluid outlets 22 and 23 may be on a common axis (Y-axis).

The impeller 40 is disposed in the housing 10. The impeller 40 may rotate in both directions. The impeller 40 may rotate in a forward direction or in a reverse direction. In this regard, the forward direction may mean a counterclockwise direction, and the reverse direction may mean a clockwise direction.

The impeller 40 may rotate in the forward direction or in the reverse direction, and transfers kinetic energy to fluid introduced into the housing 10 through the fluid inlet 21. In other words, the fluid introduced into the housing 10 through the fluid inlet 21 is compressed by the rotation of the impeller 40 and then may be discharged to the outside through either of the first and second fluid outlets 22 and 23.

The impeller 40 may be manufactured in various types, such as a rotary type, a turbine type, or a propeller type. However, in order to transfer the same kinetic energy to the fluid introduced into the housing 10 through the fluid inlet 21 regardless of a rotating direction, the impeller 40 may be preferably provided with a vane arranged parallel to a rotation axis (Z-axis) of the impeller 40.

The motor 30 imparts a rotating force to the impeller 40. That is, as the motor 30 rotates, the impeller 40 may be rotated. According to the rotating direction of the motor 30, the rotating direction of the impeller 40 may be determined. In other words, as the motor 30 rotates in the forward direction or in the reverse direction, the impeller 40 connected to the motor 30 may also rotate in the forward direction or in the reverse direction.

If the fluid such as water is introduced into the motor 30, this may lead to serious defects. As shown in FIG. 1, the motor 30 is preferably disposed outside of the housing 10. Although not shown in the drawings, a sealing member may be further included to prevent the fluid from flowing through a connecting structure of the motor 30 and the impeller 40 into the motor 30.

As described above, the bidirectional pump 100 according to the embodiment of the present disclosure has only one motor 30 and one impeller 40. Thus, when comparing this bidirectional pump 100 with a conventional bidirectional pump having two motors and two impellers, the former reduces cost and make it easier to replace and repair.

The bidirectional pump 100 according to the embodiment of the present disclosure controls which of the first or second fluid outlet 22 or 23 the fluid introduced into the housing 10 through the fluid inlet 21 is discharged to, via the diaphragm 60 that is deformed according to the rotating directions of the motor 30 and the impeller 40. This will be described below in detail.

As shown in FIG. 1, the diaphragm 60 is disposed in the housing 10, and is disposed between the first and second fluid outlets 22 and 23. According to the claimed invention, the diaphragm 60 includes an insert part 61, a deforming part 62, and a fixing part 63.

The fixing part 63 is a member that is fixed to the housing 10. In this connection, as shown in FIG. 2, the housing 10 may include a main body 11 that defines an entire exterior, and a groove part 12 that extends inwards from the main body 11. The fixing part 63 may be detachably fixed to the groove part 12 of the housing 10.

The fixing part 63 located at an end of the diaphragm 60 may be fixed to the groove part 12, so that the diaphragm 60 may be fixed to the interior of the housing 10. Furthermore, as described above, since the fixing part 63 is detachably fixed to the groove part 12, it is easy to replace and repair the diaphragm 60.

Meanwhile, according to the present disclosure, the groove part 12 is provided on each of upper and lower portions in the Z-axis direction of the bidirectional pump 100. However, a plurality of groove parts may be provided in other directions. That is, the shape and number of the groove parts are not limited.

The deforming part 62 is disposed between the fixing part 63 and the insert part 61 that will be described later, thus connecting the fixing part 63 and the insert part 61 to each other. The deforming part 62 is deformable towards either of the first and second fluid outlets 22 and 23.

The deforming part 62 may be deformed according to pressure exerted by the rotation of the impeller 40. To be more specific, when pressure acting on one side of the deforming part 62 is larger than pressure acting on the other side that is opposite to one side, the deforming part 62 may be deformed towards the other side. In contrast, when pressure acting on the other side of the deforming part 62 is larger than pressure acting on one side, the deforming part 62 may be deformed towards one side.

By way of example, as shown in FIG. 4, if the impeller 40 rotates in the forward direction, pressure in + Y-axis direction with respect to the deforming part 62 becomes larger than pressure in - Y-axis direction, so that the deforming part 62 may be deformed in + Y-axis direction, that is, towards the first fluid outlet 22.

In contrast, as shown in FIG. 5, if the impeller 40 rotates in the reverse direction, pressure in - Y-axis direction with respect to the deforming part 62 becomes larger than pressure in + Y-axis direction, so that the deforming part 62 may be deformed in - Y-axis direction, that is, towards the second fluid outlet 23.

As described above, since the deforming part 62 may be deformed and restored, the deforming part may be made of an elastic body. That is, the material of the deforming part 62 may be a rubber material.

Further, since the deforming part is disposed in the middle of the first and second fluid outlets 22 and 23 before the deformation as shown in FIG. 3, and the deforming part is biased towards either of the first and second fluid outlets 22 and 23 after the deformation as shown in FIGS. 4 and 5, it is necessary to adjust a distance between the fixing part 63 and the insert part 61.

Thus, the deforming part 62 according to the present disclosure may be wrinkled as shown in FIG. 3 before the deformation, and may be unwrinkled as shown in FIGS. 4 and 5 after the deformation.

In this case, in order to ensure the reliability of closing the first and second fluid outlets 22 and 23 by the deforming part 62, the deforming part 62 is preferably restored to a wrinkled shape as shown in FIG. 3 when the impeller 40 is not rotated.

The insert part 61 may be disposed on the center of the diaphragm 60. That is, as shown in FIG. 1 and the like, the insert part 61 may be located at the center and the deforming part 62 and the fixing part 63 may be located outside the insert part.

The center of the insert part 61 may be present on the center lines of the first and second fluid outlets 22 and 23. A portion of the insert part 61 is inserted into either of the first and second fluid outlets 22 and 23.

That is, a portion of the insert part 61 is inserted into either of the first and second fluid outlets 22 and 23, thus closing a corresponding outlet.

To this end, as shown in FIGS. 4 and 5, when the insert part 61 is formed in a spherical shape, the diameter of the insert part 61 may be smaller than the diameter of each of the first and second fluid outlets 22 and 23. Furthermore, the insert part 61 may be formed of a rubber material.

When a portion of the insert part 61 is inserted into either of the first and second fluid outlets 22 and 23, they are in surface contact with each other. As compared with a point contact or a line contact when the outlet is closed by a linear member, the surface contact allows the fluid to be more reliably sealed.

In summary, in the bidirectional pump 100 according to the present disclosure, when the impeller 40 rotates in the forward direction, the deforming part 62 is deformed towards the first fluid outlet 22, so that a portion of the insert part 61 is inserted into the first fluid outlet 22, and thereby the fluid introduced into the housing 10 through the fluid inlet 21 can be discharged to the outside through the second fluid outlet 23.

Furthermore, when the impeller 40 rotates in the reverse direction, the deforming part 62 is deformed towards the second fluid outlet 23, so that a portion of the insert part 61 is inserted into the second fluid outlet 23, and thereby the fluid introduced into the housing 10 through the fluid inlet 21 can be discharged to the outside through the first fluid outlet 22.

That is, the bidirectional pump 100 according to the present disclosure may adjust a direction in which water is supplied (discharged), via the diaphragm 60 that is deformed by the rotation of the single motor 30 and the impeller 40. In this case, it is easy to replace and repair the diaphragm 60, and the outlet can be more reliably closed by the diaphragm 60.

Meanwhile, when the fluid discharge direction is changed by the deformation of the diaphragm 60, it is necessary to make the flow of the fluid smoother.

To this end, according to the claimed invention, the bidirectional pump 100 further includes a partition wall 15 that is disposed in the housing 10 and guides the flow of the fluid from the fluid inlet 21 to either of the first and second fluid outlets 22 and 23.

The partition wall 15 is formed as a portion of the chamber 14. Here, the chamber 14 is disposed in the housing 10, and accommodates the impeller 40 and a plate 50 therein.

A portion of the partition wall 15 is fixedly inserted into the plate 50, and the partition wall is disposed in the middle of a passage through which the fluid flows. Thereby, the flow of the fluid may be guided from the fluid inlet 21 to either of the first and second fluid outlets 22 and 23.

According to the claimed invention, the width of the partition wall 15 is reduced downstream of the fluid flow from the fluid inlet to either of the first and second fluid outlets. Thereby, it is possible to naturally guide the flow of the fluid, thus minimizing flow resistance.

The housing 10 according to the embodiment of the present disclosure may not be an assembly made by assembling a plurality of members but may be integrally formed as a single member. Thereby, it is possible to prevent fluid flowing at high pressure in the housing 10 from flowing out at positions other than the fluid inlet 21 and the first and second fluid outlets 22 and 23.

Meanwhile, as shown in FIG. 1, the bidirectional pump 100 according to the embodiment of the present disclosure may further include a stopper 70. The interior of the housing 10 is accessible through the stopper 70, so that it is possible to remove foreign matter present in the housing 10 or to replace and repair components including the filter, the diaphragm 60, etc.

Furthermore, as shown in FIG. 1, the bidirectional pump 100 according to the embodiment of the present disclosure may be placed on a support 80. However, a member and a means for fixing the bidirectional pump 100 are not limited particularly.

The bidirectional pump 100 according to the embodiment of the present disclosure may further include a controller 90. The controller 90 may control the rotation and the rotating directions of the motor 30 and the impeller 40.

The controller 90 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions.

As described above, the bidirectional pump according to the embodiment of the present disclosure has been described with reference to the accompanying drawings. However, the present disclosure is not limited to the above-described embodiment.

According to the present disclosure, one or more effects are as follows.

First, a water supply direction can be changed by closing either of first and second fluid outlets through a diaphragm that is deformed according to pressure exerted by the rotation of a single motor and impeller.

Second, it is possible to minimize flow resistance while guiding the flow of fluid from a fluid inlet to either of first and second fluid outlets through a partition wall disposed in a housing.

Third, since a housing defining an exterior of a bidirectional pump is integrally formed, it is possible to prevent water from unexpectedly flowing out.

## Claims

1. A bidirectional pump (100), comprising:
a housing (10) comprising a fluid inlet (21), and first and second fluid outlets (22, 23) that communicate with the fluid inlet (21) and face each other;
an impeller (40) disposed in the housing (10), and configured to rotate in a forward direction or in a reverse direction;
a motor (30) configured to impart a rotating force to the impeller (40);
a diaphragm (60) disposed between the first and second fluid outlets (22,23) in the housing (10), and configured to be deformed according to pressure exerted by rotation of the impeller (40), wherein the diaphragm (60) is configured to close either of the first and second fluid outlets (22, 23) according to a rotating direction of the impeller (40);
a partition wall (15) disposed in the housing (10), and configured to guide flow of fluid from the fluid inlet (21) to either of the first and second fluid outlets (22, 23), and
wherein the diaphragm (60) comprises:
a fixing part (63) fixed to the housing (10);
an insert part (61) configured such that a portion thereof is insertable into either of the first and second fluid outlets (22, 23); and
a deforming part (62) connecting the fixing part (63) and the insert part (61) to each other, and deformable towards either of the first and second fluid outlets (22, 23),
**characterized in that**
wherein a width of the partition wall (15) in a plan view is reduced downstream of the fluid flow from the fluid inlet (21) to either of the first and second fluid outlets (22, 23),
wherein in the plan view the partition wall (15) is disposed between the impeller (40) and the diaphragm (60) and the fixed part (63) facing the impeller (40) is coupled to the end of the partition wall (15) with reduced width,
wherein the partition wall (15) is formed as a portion of a chamber (14), the chamber (14) is disposed in the housing (10) and accommodates the impeller (40) and a plate (50) therein, and
wherein a portion of the partition wall (15) is fixedly inserted into the plate (50) and the partition wall (15) is disposed in the middle of a passage through which the fluid flows.

2. The bidirectional pump (100) of claim 1, wherein the deforming part (62) is an elastic body, is configured to be wrinkled before the deformation, and is configured to be unwrinkled after the deformation.

3. The bidirectional pump (100) of claim 2, wherein the insert part (61) is formed in a spherical shape, and has a diameter smaller than a diameter of each of the first and second fluid outlets (22, 23).

4. The bidirectional pump (100) of claim 3, wherein,
when the impeller (40) is configured to rotate in the forward direction, the deforming part (62) is configured to be deformed towards the first fluid outlet (22) so that the portion of the insert part (61) is inserted into the first fluid outlet (22), and
when the impeller (40) is configured to rotate in the reverse direction, the deforming part (62) is configured to be deformed towards the second fluid outlet (23) so that the portion of the insert part (61) is inserted into the second fluid outlet (23).

5. The bidirectional pump (100) of any one of claims 2 to 4, wherein the fixing part (63) is detachably fixed to a groove part (12).

6. The bidirectional pump (100) of any one preceding claim, wherein the housing (10) is integrally formed to prevent the fluid from flowing in and out at positions other than the fluid inlet (21) and the first and second fluid outlets (22, 23).

7. The bidirectional pump (100) of any one preceding claim, comprising a controller (90) configured to control rotation and a rotating direction of the impeller (40).

## Patentansprüche

1. Bidirektionale Pumpe (100), umfassend:
ein Gehäuse (10) mit einem Fluideinlass (21) und einem ersten und einem zweiten Fluidauslass (22, 23), die mit dem Fluideinlass (21) in Verbindung stehen und einander gegenüberliegen;
ein Laufrad (40), das in dem Gehäuse (10) angeordnet und so konfiguriert ist, dass es sich in Vorwärtsrichtung oder in Rückwärtsrichtung dreht;
einen Motor (30), der so konfiguriert ist, dass er dem Laufrad (40) eine Drehkraft überträgt;
eine Membran (60), die zwischen dem ersten und dem zweiten Fluidauslass (22, 23) im Gehäuse (10) angeordnet ist und so konfiguriert ist, dass sie sich entsprechend einem durch die Drehung des Laufrads (40) ausgeübten Druck verformt, wobei die Membran (60) so konfiguriert ist, dass sie je nach Drehrichtung des Laufrads (40) den ersten oder den zweiten Fluidauslass (22, 23) schließt;
eine Trennwand (15), die in dem Gehäuse (10) angeordnet ist, und so konfiguriert ist, dass sie einen Fluidstrom von dem Fluideinlass (21) zu dem ersten oder dem zweiten Fluidauslass (22, 23) leitet, und
wobei die Membran (60) umfasst:
ein Befestigungsteil (63), das an dem Gehäuse (10) befestigt ist;
ein Einsatzteil (61), das so konfiguriert ist, dass ein Teil davon in den ersten oder zweiten Fluidauslass (22, 23) einsetzbar ist; und
ein Verformungsteil (62), das das Befestigungsteil (63) und das Einsatzteil (61) miteinander verbindet und in Richtung des ersten oder des zweiten Fluidauslasses (22, 23) verformbar ist,
**dadurch gekennzeichnet, dass**
wobei eine Breite der Trennwand (15) in einer Draufsicht stromabwärts des Fluidstroms vom Fluideinlass (21) zu dem ersten oder dem zweiten Fluidauslass (22, 23) verringert ist,
wobei in der Draufsicht die Trennwand (15) zwischen dem Laufrad (40) und der Membran (60) angeordnet ist und das dem Laufrad (40) zugewandte feste Teil (63) mit dem Ende der Trennwand (15) mit reduzierter Breite verbunden ist,
wobei die Trennwand (15) als Teil einer Kammer (14) ausgebildet ist, die Kammer (14) in dem Gehäuse (10) angeordnet ist und das Laufrad (40) und eine Platte (50) darin aufnimmt, und
wobei ein Teil der Trennwand (15) fest in die Platte (50) eingesetzt ist und die Trennwand (15) in der Mitte eines Durchgangs angeordnet ist, durch den das Fluid fließt.

2. Bidirektionale Pumpe (100) nach Anspruch 1, wobei das Verformungsteil (62) ein elastischer Körper ist, der so konfiguriert ist, dass er vor der Verformung gekräuselt ist, und so konfiguriert ist, dass er nach der Verformung ungekräuselt ist.

3. Bidirektionale Pumpe (100) nach Anspruch 2, wobei das Einsatzteil (61) kugelförmig ausgebildet ist und einen Durchmesser aufweist, der kleiner ist als ein Durchmesser jedes des ersten und des zweiten Fluidauslasses (22, 23).

4. Bidirektionale Pumpe (100) nach Anspruch 3, wobei
wenn das Laufrad (40) so konfiguriert ist, dass es sich in Vorwärtsrichtung dreht, der Verformungsteil (62) so konfiguriert ist, dass er in Richtung des ersten Fluidauslasses (22) verformt wird, so dass der Teil des Einsatzteils (61) in den ersten Fluidauslass (22) eingeführt wird, und
wenn das Laufrad (40) so konfiguriert ist, dass es sich in Rückwärtsrichtung dreht, das Verformungsteil (62) so konfiguriert ist, dass es sich in Richtung des zweiten Fluidauslasses (23) verformt, sodass der Teil des Einsatzteils (61) in den zweiten Fluidauslass (23) eingeführt wird.

5. Bidirektionale Pumpe (100) nach einem der Ansprüche 2 bis 4, wobei das Befestigungsteil (63) lösbar an einem Nutteil (12) befestigt ist.

6. Bidirektionale Pumpe (100) nach einem der vorstehenden Ansprüche, wobei das Gehäuse (10) einstückig ausgebildet ist, um zu verhindern, dass das Fluid an anderen Stellen als dem Fluideinlass (21) und dem ersten und zweiten Fluidauslass (22, 23) ein- und austritt.

7. Bidirektionale Pumpe (100) nach einem der vorstehenden Ansprüche, mit einer Steuereinrichtung (90), die so konfiguriert ist, dass sie eine Drehung und die Drehrichtung des Laufrads (40) steuert.

## Revendications

1. Pompe bidirectionnelle (100), comprenant:
un carter (10) comprenant une admission de liquide (21) et une première et une deuxième sorties de liquide (22, 23) qui communiquent avec l'admission de liquide (21) et se font face;
une roue (40) disposée dans le carter (10) et conçue pour tourner en avant ou en arrière;
un moteur (30) conçu pour transmettre une force de rotation à la roue (40);
un diaphragme (60) disposé entre les première et deuxième sorties de liquide (22, 23) dans le carter (10), et conçu pour se déformer en fonction de la pression exercée par la rotation de la roue (40), le diaphragme (60) étant conçu pour fermer la première ou la deuxième sortie de liquide (22, 23) en fonction d'un sens de rotation de la roue (40);
une cloison (15) disposée dans le carter (10) et conçue pour guider l'écoulement du liquide depuis l'admission de liquide (21) vers la première ou la deuxième sortie de liquide (22, 23), et
dans lequel le diaphragme (60) comprend:
une partie de fixation (63) fixée au carter (10);
une partie d'insertion (61) conçue de telle sorte qu'une partie de celle-ci puisse être insérée dans la première ou la deuxième sortie de liquide (22, 23); et
une partie déformable (62) reliant la partie de fixation (63) et la partie d'insertion (61) l'une à l'autre, et déformable vers la première ou la deuxième sortie de liquide (22, 23),
caractérisée en ce
la largeur de la cloison (15) en vue en plan est réduite en aval de l'écoulement du liquide depuis l'admission de liquide (21) vers la première ou la deuxième sortie de liquide (22, 23),
dans lequel, dans la vue en plan, la cloison (15) est disposée entre la roue (40) et le diaphragme (60) et la partie fixe (63) en regard de la roue (40) est accouplée à l'extrémité de la cloison (15) dont la largeur est réduite,
dans lequel la cloison (15) est formée comme une partie d'une chambre (14), la chambre (14) est disposée dans le carter (10) et contient la roue (40) et une plaque (50), et
dans lequel une partie de la cloison (15) est insérée à demeure dans la plaque (50) et la cloison (15) est disposée au milieu d'un passage que traverse le liquide.

2. Pompe bidirectionnelle (100) selon la revendication 1, dans laquelle la partie déformable (62) est un corps élastique, est conçue pour se plisser avant la déformation et est conçue pour se déplier après la déformation.

3. Pompe bidirectionnelle (100) selon la revendication 2, dans laquelle la partie d'insertion (61) se présente sous une forme sphérique et présente un diamètre inférieur au diamètre de chacune des première et deuxième sorties de liquide (22, 23).

4. Pompe bidirectionnelle (100) selon la revendication 3, dans laquelle, lorsque la roue (40) est conçue pour tourner vers l'avant, la partie déformable (62) est conçue pour être déformée vers la première sortie de liquide (22) de sorte que la portion de la partie d'insertion (61) soit insérée dans la première sortie de liquide (22), et
lorsque la roue (40) est conçue pour tourner dans le sens inverse, la partie déformable (62) est conçue pour se déformer vers la deuxième sortie de liquide (23) de manière à ce que la portion de la partie d'insertion (61) soit insérée dans la deuxième sortie de liquide (23).

5. Pompe bidirectionnelle (100) selon l'une quelconque des revendications 2 à 4, dans laquelle la partie de fixation (63) est fixée amovible à une partie rainurée (12).

6. Pompe bidirectionnelle (100) de l'une quelconque revendication précédente, dans laquelle le carter (10) est formé d'un seul tenant afin d'empêcher le liquide de s'écouler à l'intérieur et à l'extérieur à des endroits autres que l'admission de liquide (21) et les première et deuxième sorties de liquide (22, 23).

7. Pompe bidirectionnelle (100) selon l'une quelconque revendication précédente, comprenant un organe de commande (90) conçu pour commander la rotation et le sens de rotation de la roue (40).
